# EUROPÄISCHE PATENTSCHRIFT

(11) **EP 2 978 581 B1**
(45) Veröffentlichungstag und Bekanntmachung des Hinweises auf die Patenterteilung: **25.10.2017**
(21) Anmeldenummer: 14722534.6
(22) Anmeldetag: 27.03.2014
(51) Int. Cl.: B29C 45/00, F16H 55/48, B29C 45/27

(54) **RIEMENROLLE UND VERFAHREN ZU DEREN HERSTELLUNG**
BELT PULLEY AND METHOD FOR PRODUCING IT
POULIE À COURROIE ET PROCÉDÉ PERMETTANT LA FABRICATION DE LADITE POULIE À COURROIE

(30) Priorität: 28.03.2013 DE 102013005373
(43) Veröffentlichungstag der Anmeldung: 03.02.2016
(73) Patentinhaber: Schaeffler Technologies AG & Co. KG, 91074 Herzogenaurach (DE)
(72) Erfinder: BELL, Lorenz, 90427 Nürnberg (DE)
(86) Internationale Anmeldenummer: PCT/DE2014/200143
(87) Internationale Veröffentlichungsnummer: WO 2014/154218

(56) Entgegenhaltungen:
- DE-B4- 10 360 290
- JP-A- H0 825 501
- JP-A- H09 166 199
- JP-A- 2002 292 678
- JP-A- 2011 137 517

## Beschreibung

Die Erfindung betrifft eine Riemenrolle für einen Riementrieb und ein Kunststoff-Spritzgießverfahren zu deren Herstellung. Die Riemenrolle umfasst ein Wälzlager und einen das Wälzlager umschließenden Laufring aus Kunststoff, mit dem der Wälzlageraußenring umspritzt ist. Eine Stirnseite des Laufrings weist eine Vielzahl von Anspritzpunkten auf, die auf den Sektorradien von Kreissektoren verlaufen, die einen gemeinsamen Mittelpunkt auf der Drehachse der Riemenrolle und zumindest zwei unterschiedlich große Mittelpunktswinkel haben.

### Hintergrund der Erfindung

Derartige Riemenrollen werden üblicherweise in Riementrieben von Brennkraftmaschinen zum Spannen oder Umlenken des Riemens eingesetzt. Um die Betriebsgeräusche des Riementriebs auf einem möglichst niedrigen Niveau zu halten, ist es aus der DE 103 60 290 B4 bekannt, die aus der Unrundheit des Laufrings resultierende Schwingungsanregung des Riemens klein zu halten. Dies gelingt durch die besondere Formgebung beim Kunststoff-Spritzgießen des Laufrings und konkret durch die Positionierung der Anspritzpunkte, die in ungleichmäßigen Winkelpositionen auf der Stirnseite des Laufrings verteilt sind. Hierdurch wird die beim Spritzgießen unvermeidliche Unrundheit des Laufrings definiert und ausreichend ungleichmäßig über der Riemenlauffläche verteilt. Aufgrund dieser Detailgestaltung lassen sich vor allem die besonders unerwünschten Resonanzeffekte im Riementrieb verhindern.

Die ungleichmäßige Winkelverteilung der Anspritzpunkte bewirkt jedoch einen zeitlich ungleichmäßigen Befüllfortschritt der Spritzgießkavität mit der Kunststoffschmelze, wobei die prozessbedingte Druckerhöhung gegen Ende des Umspritzvorgangs den Wälzlageraußenring unrund verformt und diese Deformation zu betrieblicher Geräuschentwicklung und frühzeitigem Ausfall des Wälzlagers führt.

### Aufgabe der Erfindung

Der Erfindung liegt die Aufgabe zugrunde, eine Riemenrolle der eingangs genannten Art mit verringerter Deformation des Wälzlageraußenrings und ein korrespondierendes Spritzgießverfahren zur Herstellung einer solchen Riemenrolle anzugeben.

### Zusammenfassung der Erfindung

Die Lösung dieser Aufgabe ergibt sich aus den Merkmalen des Vorrichtungsanspruchs 1 bzw. des Verfahrensanspruchs 5. Demnach soll ein Teil der Kreissektoren Sektorradien aufweisen, auf denen die Anspritzpunkte unterschiedlich große Querschnitte haben, wobei der Mittelpunktswinkel des seitens des größeren Anspritzquerschnitts benachbarten Kreissektors größer als der Mittelpunktswinkel des seitens des kleineren Anspritzquerschnitts benachbarten Kreissektors ist. Die ungleichmäßige Dimensionierung der Anspritzquerschnitte erzeugt im Angusssystem lokal unterschiedliche Druckverluste mit entsprechend unterschiedlichen Strömungsgeschwindigkeiten an den Anspritzpunkten. Dabei werden die unterschiedlichen Fließweglängen von den Anspritzpunkten zu diesen Bereichen kompensiert, so dass die zuletzt befüllten Bereiche der Spritzgießkavität im wesentlichen zeitgleich von der Kunststoffschmelze erreicht werden.

Somit wird die für die geringe Schwingungsanregung durch die Riemenrolle optimale Ungleichverteilung der Anspritzpunkte beibehalten, und der sich daraus bislang ergebende Nachteil der ungleichmäßigen Deformation des Wälzlageraußenrings wird durch die erfindungsgemäß ungleichmäßige Dimensionierung der Anspritzquerschnitte kompensiert oder idealerweise sogar eliminiert. Dies gilt ebenso für den Fall, dass der Laufring faserverstärkt ist. In diesem Fall reduziert oder verhindert die Erfindung den bisherigen Zustand, dass Fasern, die mit dem gegen Ende des Befüllvorgangs erzwungenen Kunststoffschmelzefluss in Rollenumlaufrichtung orientiert sind, das Schwindungsverhalten der erkaltenden Kunststoffschmelze beeinträchtigen und hierdurch den Wälzlageraußenring deformieren.

### Kurze Beschreibung der Zeichnungen

Weitere Merkmale der Erfindung ergeben sich aus der nachfolgenden Beschreibung und aus den Zeichnungen, in denen ein Ausführungsbeispiel einer erfindungsgemäßen Riemenrolle für einen Nebenaggregate-Riementrieb einer Brennkraftmaschine dargestellt ist. Es zeigen:
- Figur 1: die Riemenrolle in perspektivischer Ansicht;
- Figur 2: die Riemenrolle im Längsschnitt;
- Figur 3: die Riemenrolle in Draufsicht auf die Anspritzseite;
- Figur 4: die Anspritzgeometrie des Laufrings;
- Figur 5: die zur Anspritzgeometrie zugehörige Wertetabelle;
- Figur 6: in schematischer Darstellung den Angusskanal eines Kaltverteilers einer Spritzgießmaschine.

### Ausführliche Beschreibung der Zeichnungen

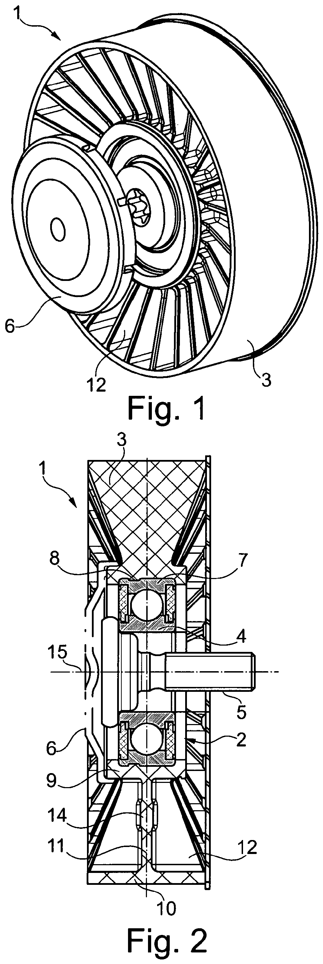

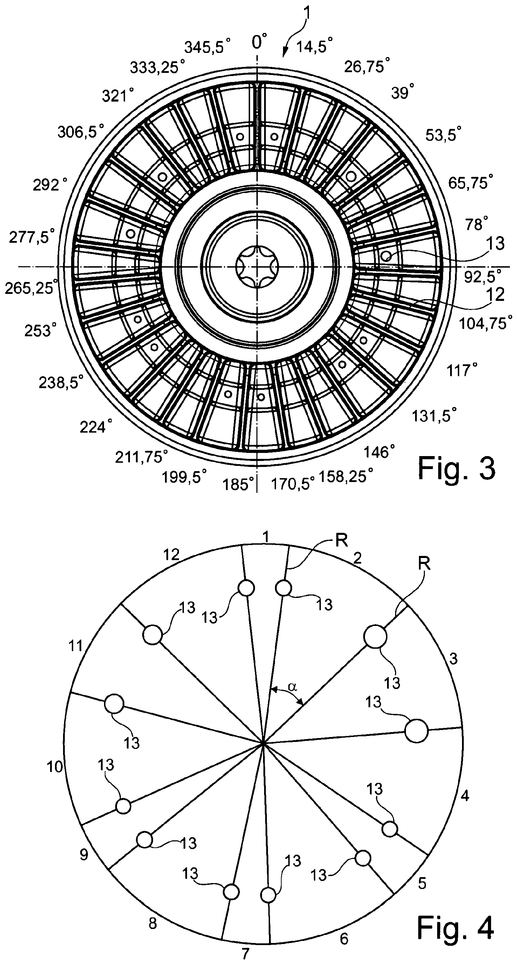

Die in den Figuren 1 bis 3 dargestellte Riemenrolle 1 umfasst ein Wälzlager 2 in Form eines einreihigen Kugellagers mit beidseitiger Abdichtung, einen aus Kunststoff bestehenden Laufring 3 für einen Poly-V-Riemen, eine im Innenring 4 des Kugellagers zentrierte Befestigungsschraube 5 und eine auf den Laufring aufgeschnappte Abdeckkappe 6 zum Schutz des Kugellagers vor Schmutz und Spritzwasser. Die Abdeckkappe ist in Figur 2 nur angedeutet und in Figur 3 abgenommen.

Der hier aus Polyamid PA66 mit 25% Glasfaserverstärkung bestehende Laufring 3 ist durch Umspritzung des Lageraußenrings 7 hergestellt. Der Laufring umschließt den Lageraußenring an dessen zylindrischer Mantelfläche und verkrallt sich auf bekannte Weise in der Verzahnung einer darin umlaufenden Nut 8. Der Laufring setzt sich geometrisch aus einem inneren Ring 9, einem äußeren Ring 10, einem die beiden Ringe verbindenden Ringsteg 11 und einer ungeraden Vielzahl von Rippen 12 zusammen, die den äußeren Ring gegen den inneren Ring abstützen. Auf jeder Seite des Ringstegs erstrecken sich 27 Rippen mit ungleichmäßiger Winkelverteilung in radialer Richtung. Das Umspritzen des Lageraußenrings erfolgt an Anspritzpunkten 13, die an einer Stirnseite des Laufrings mit ungleichmäßiger Winkelverteilung jeweils mittig zwischen zwei benachbarten Rippen auf einer sich auf dem Ringsteg erhebenden Ringwulst 14 verlaufen, die als Fließhilfe für die Kunststoffschmelze dient. Der Außendurchmesser des Laufrings beträgt 90 mm, und der Teilkreisdurchmesser, auf dem die Anspritzpunkte angeordnet sind, beträgt 61 mm.

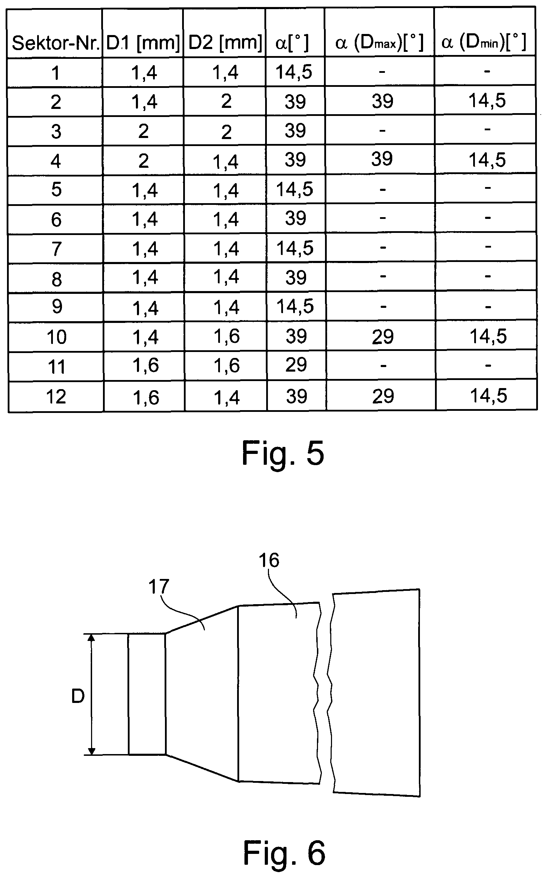

Figur 4 zeigt eine erfindungsgemäße Anspritzgeometrie des Laufrings 3. Die Anspritzgeometrie ist das Ergebnis einer Kunststoffspritzgießsimulation, die eine Vergleichmäßigung des zeitlichen Befüllfortschritts der kreisringförmigen Spritzgießkavität mit der stirnseitig darin eingespritzten Kunststoffschmelze zum Ziel hatte. Wie oben erläutert, reduziert ein derartig vergleichmäßigter Befüllvorgang die Unrundverformung des Lageraußenrings 7 infolge der prozessbedingten Druckerhöhung gegen Ende des Befüllvorgangs und zum gleichen Zeitpunkt auch die unerwünschte Faserorientierung in Rollenumlaufrichtung, welche den Lageraußenring ebenfalls deformiert. Die Simulation erfolgte mittels des Prozesssimulationsprogramms "Autodesk Moldflow", wobei die Parameter Anzahl, Umfangsposition und Querschnitt der Anspritzpunkte 13, nicht jedoch die umfänglich ungleichmäßige Anordnung der Rippen 12 verändert wurden, deren Winkel aus der bemaßten Figur 3 hervorgehen. Eine zugunsten minimaler Deformation des Lageraußenrings optimale Anspritzgeometrie ergibt sich bei dieser Rippenanordnung mit zwölf Anspritzpunkten, deren Durchmesser und Umfangsverteilung aus Figur 4 und aus der Wertetabelle gemäß Figur 5 hervorgehen.

Weitere Parameter der Simulation:
ca. 1,2 Mio Elemente, 1 Nest modelliert
Füllzeit: 1,8 s
Profilierte Druckerhöhung: 12 s, 700/500 bar
Werkzeug: 80°C, Schmelze 295°C

Geometrisch betrachtet verlaufen die Anspritzpunkte 13 auf den Sektorradien R von Kreissektoren Nr.1 bis Nr.12, die einen gemeinsamen Mittelpunkt auf der Drehachse 15 der Riemenrolle 1 (siehe Figur 2) und drei unterschiedlich große Mittelpunktswinkel α mit 14,5°, 29° und 39° haben. Ein Teil der Kreissektoren, nämlich die Sektoren Nr.2, Nr.4, Nr.10 und Nr.12 weist Sektorradien auf, auf denen die Anspritzpunkte unterschiedlich große Querschnitte haben. Beispielsweise beträgt beim Kreissektor Nr.2 der Durchmesser D1 des einen Anspritzpunkts 1,4 mm und der Durchmesser D2 des anderen Anspritzpunkts 2,0 mm. Für diesen Teil der Kreissektoren gilt nun, dass der Mittelpunktswinkel des einen Kreissektors, der auf der Nachbarseite des größeren Anspritzquerschnitts verläuft, größer als der Mittelpunktswinkel des anderen Kreissektors ist, der auf der Nachbarseite des kleineren Anspritzquerschnitts verläuft. Bei dem beispielhaft erläuterten Kreissektor Nr.2 beträgt der Mittelpunktswinkel des seitens des mit D2=2,0 mm größeren Anspritzquerschnitts benachbarten Kreissektors Nr.3 α(Dmax)=39°, und der Mittelpunktswinkel des seitens des mit D1=1,4 mm kleineren Anspritzquerschnitts benachbarten Kreissektors Nr.1 α(Dmin)=14,5°. Das bedeutet stark vereinfacht ausgedrückt: der für die Befüllung eines größeren Winkelbereichs zuständige Anspritzpunkt hat auch einen entsprechend großen Anspritzquerschnitt. Die Parameterwerte der anderen Kreissektoren sind der Tabelle entsprechend zu entnehmen.

Alternativ zu dem dargestellten Ausführungsbeispiel ist es auch denkbar, den Querschnitt der Anspritzpunkte nicht-kreisförmig auszuführen und/oder deren Querschnitt auf mehrere Anspritzpunkte je Sektorradius R aufzuteilen. Die Durchmesser D kreisförmiger Anspritzpunkte liegen vorzugsweise zwischen 0,8 mm und 2,4 mm.

Das Umspritzen des Lageraußenrings 7 mit Kunststoff erfolgt über einen Kaltverteiler mit einer Vielzahl von Angusskanälen, die stirnseitig der den Laufring 3 begrenzenden Kavität korrespondierend zur Umfangsverteilung der Anspritzpunkte 13 angeordnet sind. Wie in Figur 6 schematisch dargestellt, sollen die Querschnitte und somit die Volumina der Angusskanäle 16 bis zu einem Übergangskonus 17 identisch sein, wobei der Konuswinkel jedes Übergangskonus so bemessen ist, dass der Querschnitt des Angusskanals auf den jeweiligen Querschnitt bzw. Durchmesser D des Anspritzpunkts (Anschnittquerschnitt) reduziert wird.

### Bezugszahlen

- 1: Riemenrolle
- 2: Wälzlager
- 3: Laufring
- 4: Lagerinnenring
- 5: Befestigungsschraube
- 6: Abdeckkappe
- 7: Lageraußenring
- 8: Nut
- 9: innerer Ring
- 10: äußerer Ring
- 11: Ringsteg
- 12: Rippe
- 13: Anspritzpunkt
- 14: Ringwulst
- 15: Drehachse
- 16: Angussskanal
- 17: Übergangskonus

## Patentansprüche

1. Riemenrolle für einen Riementrieb, umfassend ein Wälzlager (2) und einen das Wälzlager (2) umschließenden Laufring (3) aus Kunststoff, mit dem der Wälzlageraußenring (7) umspritzt ist, wobei eine Stirnseite des Laufrings (3) eine Vielzahl von Anspritzpunkten (13) aufweist, die auf den Sektorradien (R) von Kreissektoren verlaufen, die einen gemeinsamen Mittelpunkt auf der Drehachse (15) der Riemenrolle (1) und zumindest zwei unterschiedlich große Mittelpunktswinkel (α) haben, **dadurch gekennzeichnet, dass** ein Teil der Kreissektoren Sektorradien (R) aufweist, auf denen die Anspritzpunkte (13) unterschiedlich große Querschnitte haben, wobei der Mittelpunktswinkel (α) des seitens des größeren Anspritzquerschnitts benachbarten Kreissektors größer als der Mittelpunktswinkel (α) des seitens des kleineren Anspritzquerschnitts benachbarten Kreissektors ist.

2. Riemenrolle nach Anspruch 1, **dadurch gekennzeichnet, dass** der Laufring (3) einen inneren Ring (9), einen äußeren Ring (10) und einen den inneren Ring (9) mit dem äußeren Ring (10) verbindenden Ringsteg (11) sowie zu beiden Seiten des Ringstegs (11) eine Vielzahl von Rippen (12) aufweist, die sich mit ungleichmäßiger Winkelverteilung radial erstrecken und den äußeren Ring (10) gegen den inneren Ring (9) abstützen, wobei die Anspritzpunkte (13) jeweils zwischen zwei Rippen (12) auf einer sich auf dem Ringsteg (11) erhebenden Ringwulst (14) verlaufen.

3. Riemenrolle nach Anspruch 2, **dadurch gekennzeichnet, dass** die Rippenanzahl ungerade ist.

4. Riemenrolle nach Anspruch 1, **dadurch gekennzeichnet, dass** die Anspritzpunkte (13) kreisförmig sind und unterschiedliche Durchmesser (D) zwischen 0,8 mm und 2,4 mm aufweisen.

5. Verfahren zur Herstellung einer Riemenrolle (1) für einen Riementrieb, umfassend ein Wälzlager (2) und einen das Wälzlager (2) umschließenden Laufring (3) aus Kunststoff gemäß einem der vorhergehenden Ansprüche, (3) aus Kunststoff gemäß einem der vorhergehenden Ansprüche, **gekennzeichnet durch** folgenden Verfahrensschritt:
- Umspritzen des Wälzlageraußenrings (7) mit Kunststoff in einer kreisringförmigen Kavität mit stirnseitiger Anspritzung über einen Verteiler mit einer Vielzahl von Angusskanälen (16), die auf den Sektorradien (R) von Kreissektoren verlaufen, die einen gemeinsamen Mittelpunkt auf der Drehachse (15) der Riemenrolle (1) und zumindest zwei unterschiedlich große Mittelpunktswinkel (α) haben, wobei ein Teil der Kreissektoren Sektorradien (R) aufweist, auf denen die Angusskanäle (16) mit unterschiedlich großen Anspritzquerschnitten in der Kavität münden, wobei der Mittelpunktswinkel (α) des seitens des größeren Anspritzquerschnitts benachbarten Kreissektors größer als der Mittelpunktswinkel (α) des seitens des kleineren Anspritzquerschnitts benachbarten Kreissektors ist.

## Claims

1. Belt pulley for a belt drive, comprising an anti-friction bearing (2) and a raceway (3) made from plastic which encloses the anti-friction bearing (2) and with which the anti-friction bearing outer ring (7) is encapsulated by injection moulding, a front side of the raceway (3) having a multiplicity of injection points (13) which run on the sector radii (R) of circle sectors which have a common centre point on the rotational axis (15) of the belt pulley (1) and at least two centre point angles (α) of different magnitude, **characterized in that** part of the circle sectors have sector radii (R), on which the injection points have cross sections of different size, the centre point angle (α) of the adjacent circle sector on the side of the larger injection cross section being greater than the centre point angle (α) of the adjacent circle sector on the side of the smaller injection cross section.

2. Belt pulley according to Claim 1, **characterized in that** the raceway (3) has an inner ring (9), an outer ring (10) and an annular web (11) which connects the inner ring (9) to the outer ring (10), and, on both sides of the annular web (11), a multiplicity of ribs (12) which extend radially with an inhomogeneous angular distribution and support the outer ring (10) against the inner ring (9), the injection points (13) running in each case between two ribs (12) on an annular bead (14) which rises up on the annular web (11).

3. Belt pulley according to Claim 2, **characterized in that** the number of ribs is odd.

4. Belt pulley according to Claim 1, **characterized in that** the injection points (13) are circular and have different diameters (D) between 0.8 mm and 2.4 mm.

5. Method for producing a belt pulley (1) for a belt drive, comprising an anti-friction bearing (2) and a raceway (3) made from plastic which encloses the anti-friction bearing (2), according to one of the preceding claims, (3) made from plastic according to one of the preceding claims, **characterized by** the following method step:
- encapsulation of the anti-friction bearing outer ring (7) with plastic by injection moulding in a circularly annular cavity with front-side injection via a distributor with a multiplicity of runners (16) which run on the sector radii (R) of circle sectors which have a common centre point on the rotational axis (15) of the belt pulley (1) and at least two centre point angles (α) of different magnitude, part of the circle sectors having sector radii (R), on which the runners (16) open into the cavity with injection cross sections of different size, the centre point angle (α) of the adjacent circle sector on the side of the larger injection cross section being greater than the centre point angle (α) of the adjacent circle sector on the side of the smaller injection cross section.

## Revendications

1. Poulie à courroie pour un entraînement à courroie, comprenant un palier à roulement (2) et un anneau mobile (3) en matière plastique entourant le palier à roulement (2), avec laquelle la bague extérieure (7) du palier à roulement a été enrobée, dans laquelle un côté frontal de l'anneau mobile (3) présente une multiplicité de points de projection (13), qui s'étendent sur des rayons de secteur (R) de secteurs de cercle, qui ont un point central commun sur l'axe de rotation (15) de la poulie à courroie (1) et au moins deux angles au centre (α) de grandeur différente, **caractérisée en ce qu'**une partie des secteurs de cercle présente des rayons de secteur (R) sur lesquels les points de projection (13) ont des sections transversales de grandeur différente, dans laquelle l'angle au centre (α) du secteur de cercle voisin du côté de la plus grande section transversale de projection est plus grand que l'angle au centre (α) voisin du côté de la plus petite section transversale de projection.

2. Poulie à courroie selon la revendication 1, **caractérisée en ce que** l'anneau mobile (3) présente un anneau intérieur (9), un anneau extérieur (10) et une aile annulaire (11) reliant l'anneau intérieur (9) à l'anneau extérieur (10) ainsi que sur les deux côtés de l'aile annulaire (11) une multiplicité de nervures (12), qui s'étendent latéralement avec une répartition angulaire non uniforme et appuient l'anneau extérieur (10) contre l'anneau intérieur (9), dans laquelle les points de projection (13) s'étendent respectivement entre deux nervures (12) sur un renflement annulaire (14) en relief sur l'aile annulaire (11).

3. Poulie à courroie selon la revendication 2, **caractérisée en ce que** le nombre de nervures est impair.

4. Poulie à courroie selon la revendication 1, **caractérisée en ce que** les points de projection (13) sont circulaires et présentent des diamètres (D) différents entre 0,8 mm et 2,4 mm.

5. Procédé de fabrication d'une poulie à courroie (1) pour un entraînement à courroie, comprenant un palier à roulement (2) et un anneau mobile (3) en matière plastique entourant le palier à roulement (2) selon l'une quelconque des revendications précédentes, (3) en matière plastique selon l'une quelconque des revendications précédentes, **caractérisé par** l'étape de procédé suivante:
- enrober la bague extérieure (7) du palier de roulement par projection de matière plastique dans une cavité annulaire circulaire avec projection frontale via un répartiteur avec une multiplicité de canaux de coulée (16), qui s'étendent sur des rayons de secteur (R) de secteurs circulaires, qui ont un point central commun sur l'axe de rotation (15) de la poulie à courroie (1) et au moins deux angles au centre (α) de grandeur différente, dans lequel une partie des secteurs de cercle présente des rayons de secteur (R), sur lesquels les canaux de coulée (16) débouchent dans la cavité avec des sections transversales de projection de grandeur différente, dans lequel l'angle au centre (α) du secteur de cercle voisin du côté de la plus grande section transversale de projection est plus grand que l'angle au centre (α) voisin du côté de la plus petite section transversale de projection.
